(19) **Europäisches Patentamt**
**European Patent Office**
**Office européen des brevets**

(11) **EP 4 665 037 A1**

(12) **EUROPEAN PATENT APPLICATION**
published in accordance with Art. 153(4) EPC

(43) Date of publication:
**17.12.2025 Bulletin 2025/51**

(21) Application number: **24762946.2**

(22) Date of filing: **31.01.2024**

(51) International Patent Classification (IPC):
*H04W 72/044* (2023.01)     *G06N 5/04* (2023.01)
*H04W 72/232* (2023.01)     *H04L 41/16* (2022.01)

(52) Cooperative Patent Classification (CPC):
**G06N 5/04; H04L 41/16; H04W 72/044;
H04W 72/232**

(86) International application number:
**PCT/CN2024/074914**

(87) International publication number:
**WO 2024/179263 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.02.2023  CN 202310227057**

(71) Applicant: **Huawei Technologies Co., Ltd.
Shenzhen, Guangdong 518129 (CN)**

(72) Inventors:
• **LIU, Lifu
Shenzhen, Guangdong 518129 (CN)**

• **SUN, Yan
Shenzhen, Guangdong 518129 (CN)**
• **CHEN, Hongzhi
Shenzhen, Guangdong 518129 (CN)**
• **XUE, Songyan
Shenzhen, Guangdong 518129 (CN)**
• **PANG, Jiyong
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND APPARATUS**

(57)     A communication method and apparatus are provided. The method includes: A first communication apparatus determines a first group of reference signal resources from multiple groups of reference signal resources. The first communication apparatus determines a first reference signal resource based on the first group of reference signal resources and a model. According to the method in this application, a group of reference signal resources is selected from the multiple groups of reference signal resources, and model inference is performed by using the selected group of reference signal resources. In comparison with a manner of performing model inference by using a fixed pattern or a random pattern, this method can improve accuracy of an inference result.

FIG. 9

**Description**

CROSS-REFERENCE TO RELATED APPLICATIONS

This application claims priority to Chinese Patent Application No. 202310227057.4, filed with the China National Intellectual Property Administration on February 27, 2023 and entitled "COMMUNICATION METHOD AND APPARATUS", which is incorporated herein by reference in its entirety.

TECHNICAL FIELD

Embodiments of this application relate to the field of communication technologies, and in particular, to a communication method and apparatus.

BACKGROUND

In wireless communication networks, for example, in mobile communication networks, services supported by the network are increasingly diverse, and thus a growing variety of demands need to be satisfied. For example, the network needs to support an ultra-high rate, an ultra-low latency, and/or massive connections. This feature makes network planning, network configuration, and/or resource scheduling increasingly complex. In addition, with network's functions become more powerful, for example, supporting higher spectrums, supporting higher-order multiple-input multiple-output (multiple-input multiple-output, MIMO), beamforming, and/or beam management, and other new technologies, network energy saving has become a hot research topic. These new requirements, scenarios, and features bring unprecedented challenges to network planning, operation and maintenance, and efficient operation. To address the challenges, artificial intelligence technologies can be introduced into the wireless communication networks to implement network intelligence. Based on this, how to effectively implement artificial intelligence in a network, for example, how to use artificial intelligence for information transmission, is a problem worth studying.

SUMMARY

Embodiments of this application provide a communication method and apparatus, to integrate artificial intelligence technologies into wireless communication networks, and improve accuracy of a signal resource inferred based on a model.

According to a first aspect, a communication method is provided, and may be performed by a first communication apparatus. The first communication apparatus may be a terminal or a chip or a circuit in the terminal. The method includes: The first communication apparatus determines a first group of reference signal resources from multiple groups of reference signal resources. The first communication apparatus determines a first reference signal resource based on the first group of reference signal resources and a model.

In the foregoing design, an example in which the first communication apparatus is a terminal is used. Each time the terminal predicts an optimal receive beam, the terminal determines a group of reference signal resources from the multiple groups of reference signal resources. The terminal performs model inference by using the determined group of reference signal resources. In this way, each time the terminal predicts an optimal receive beam, a different group of reference signal resources may be selected as an input for model inference. This is relatively flexible, and can resolve a problem, in a conventional technology, that a predicted receive beam is low in precision because the terminal uses beams at several fixed locations as inputs for model inference each time the terminal predicts an optimal beam. For example, when the terminal predicts an optimal receive beam at a specific time, if beams at several fixed locations are fixedly used as inputs for model inference, the beams at the several fixed locations may be blocked. As a result, when the terminal measures the several beams, measurement results of the blocked beams cannot be extracted. Consequently, accuracy of predicting the optimal receive beam is low. However, in the solution of this application, the terminal may use a different beam for each time of prediction, avoiding a probability that a beam is blocked when the fixed beam is used for prediction, so that accuracy of predicting an optimal beam can be improved.

In a design, that the first communication apparatus determines the first group of reference signal resources from the multiple groups of reference signal resources includes: The first communication apparatus receives first indication information from a second communication apparatus, where the first indication information includes indication information of the first group of reference signal resources. The first communication apparatus determines the first group of reference signal resources from the multiple groups of reference signal resources based on the first indication information. Optionally, the second communication apparatus is an access network device, or a chip, a circuit, or the like in the access network device.

In the foregoing design, an example in which the first communication apparatus is a terminal and the second communication apparatus is an access network device is used. When the terminal accesses different access network devices, because the accessed access network devices learn that beams supported by the access network devices block each other, the access network device may select, from the multiple groups of reference signal resources, a group of reference signal resources corresponding to beams that are not blocked or a group of reference signal resources corresponding to beams that are less blocked, and indicate the selected group of reference signal resources to the terminal. In this way, the terminal may extract measurement results from all reference signals corresponding to the group of reference signal resources indicated by the access network device, so that accuracy of predicting an optimal receive beam can be improved. Further, in the design, each group of reference signal resources may have a corresponding number, and the first indication information may include a number of the first group of reference signal resources. The terminal may determine, based on the number included in the first indication information, the first group of reference signal resources indicated by the access network device. The multiple groups of reference signal resources are separately numbered, and the first indication information includes the number of the first group of reference signal resources, so that overheads for indicating a group of reference signal resources can be reduced.

In a design, that the first communication apparatus determines the first group of reference signal resources from the multiple groups of reference signal resources includes: The first communication apparatus receives second indication information from a second communication apparatus, where the second indication information includes indication information of at least one reference signal resource included in the first group of reference signal resources. The first communication apparatus determines the first group of reference signal resources from the multiple groups of reference signal resources based on the second indication information.

Different from the foregoing design, in the design, the multiple groups of reference signal resources may not be separately numbered. Each group of reference signal resources includes at least one reference signal resource. The reference signal resource included in each group of reference signal resources has a global identifier, and the global identifier may be a number corresponding to each reference signal resource in a reference signal resource universal set. Because reference signal resources included in all groups of reference signal resources are not completely the same, the reference signal resource included in each group of reference signal resources may indicate a corresponding reference signal resource group. In the design, the multiple groups of reference signal resources do not need to be separately numbered, so that a processing process can be reduced.

In a design, the method further includes: The first communication apparatus receives configuration information from the second communication apparatus, where the configuration information includes configuration information of the multiple groups of reference signal resources. The first communication apparatus obtains the multiple groups of reference signal resources based on the configuration information of the multiple groups of reference signal resources.

According to the foregoing design, an example in which the first communication apparatus is a terminal and the second communication apparatus is an access network device is used. The access network device may define the multiple groups of reference signal resources. For example, when the terminal accesses a network, the multiple groups of reference signal resources are configured for the terminal. Compared with the terminal, the access network device has a powerful processing function. The foregoing design is used, so that the access network device can accurately define the multiple groups of reference signal resources.

In a design, that the first communication apparatus determines the first reference signal resource based on the first group of reference signal resources and the model includes: The first communication apparatus measures the first group of reference signal resources to obtain a measurement result of the first group of reference signal resources. The first communication apparatus determines an input of the model based on the measurement result of the first group of reference signal resources. The first communication apparatus determines an output of the model based on the input of the model and the model. The first communication apparatus determines the first reference signal resource based on the output of the model.

According to a second aspect, a communication method is provided, and may be performed by a second communication apparatus. The second communication apparatus may be an access network device, or a chip, a circuit, or the like in the access network device. The method includes: The second communication apparatus generates configuration information, where the configuration information includes configuration information of multiple groups of reference signal resources. The second communication apparatus sends the configuration information to a first communication apparatus.

In a design, the method further includes: The second communication apparatus sends first indication information to the first communication apparatus, where the first indication information includes indication information of a first group of reference signal resources in the multiple groups of reference signal resources.

In a design, the method further includes: The second communication apparatus sends second indication information to the first communication apparatus, where the second indication information includes indication information of at least one reference signal resource included in a first group of reference signal resources, and the first group of reference signal resources belongs to the multiple groups of reference signal resources.

According to a third aspect, an apparatus is provided. The apparatus includes a corresponding unit or module for performing the method according to the first aspect or the second aspect. The unit or module may be implemented by a hardware circuit, may be implemented by software, or may be implemented by a combination of a hardware circuit and software.

According to a fourth aspect, an apparatus is provided, and includes a processor and an interface circuit. The processor is configured to communicate with another apparatus through the interface circuit, and perform the method according to the first aspect or the second aspect. There are one or more processors.

According to a fifth aspect, an apparatus is provided, and includes a processor coupled to a memory. The processor is configured to execute a program stored in the memory, to perform the method according to the first aspect or the second aspect. The memory may be located inside or outside the apparatus. In addition, there may be one or more processors.

According to a sixth aspect, an apparatus is provided, and includes a processor and a memory. The memory is configured to store computer instructions. When the apparatus runs, the processor executes the computer instructions stored in the memory, to enable the apparatus to perform the method according to the first aspect or the second aspect.

According to a seventh aspect, a chip system is provided, includes a processor or a circuit, and is configured to perform the method according to the first aspect or the second aspect.

According to an eighth aspect, a computer-readable storage medium is provided. The computer-readable storage medium stores instructions. When the instructions are run on a communication apparatus, the method according to the first aspect or the second aspect is performed.

According to a ninth aspect, a computer program product is provided. The computer program product includes a computer program or instructions. When the computer program or the instructions are run by an apparatus, the method according to the first aspect or the second aspect is performed.

According to a tenth aspect, a system is provided, and includes the first communication apparatus that performs the method according to the first aspect and the second communication apparatus that performs the method according to the second aspect.

For beneficial effects of the second aspect to the tenth aspect, refer to the descriptions of the first aspect.

BRIEF DESCRIPTION OF DRAWINGS

FIG. 1 is a diagram of a communication system according to an embodiment of this application;
FIG. 2 is a diagram of deploying an AI model according to an embodiment of this application;
FIG. 3 is another diagram of deploying an AI model according to an embodiment of this application;
FIG. 4 is a diagram of an architecture of an access network device according to an embodiment of this application;
FIG. 5 is another diagram of an architecture of an access network device according to an embodiment of this application;
FIG. 6 is a diagram of an application architecture of an AI model according to an embodiment of this application;
FIG. 7 is a diagram of a neuron according to an embodiment of this application;
FIG. 8 is a diagram of a layer relationship of a neural network according to an embodiment of this application;
FIG. 9 is a flowchart of a communication method according to an embodiment of this application;
FIG. 10 is another flowchart of a communication method according to an embodiment of this application;
FIG. 11 is a diagram of four groups of reference signal resources according to an embodiment of this application;
FIG. 12 is still another flowchart of a communication method according to an embodiment of this application;
FIG. 13 is a diagram of an apparatus according to an embodiment of this application; and
FIG. 14 is another diagram of an apparatus according to an embodiment of this application.

DESCRIPTION OF EMBODIMENTS

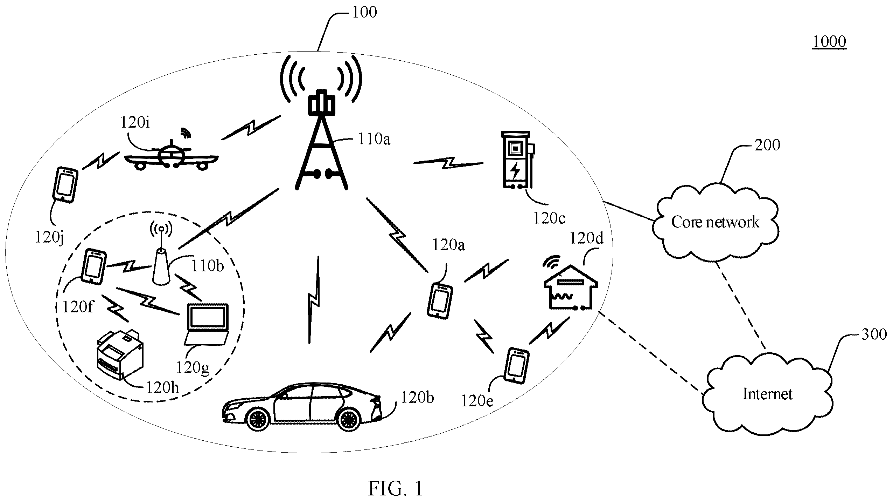

FIG. 1 is a diagram of an architecture of a communication system 1000 to which an embodiment of this application can be applied. As shown in FIG. 1, the communication system 1000 includes a radio access network 100 and a core network 200. Optionally, the communication system 1000 may further include an internet 300.

The radio access network 100 may include at least one access network device (for example, 100a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or a part of the functions of the core network device and a part of the functions of the access network device may be integrated into one physical device. Terminals may be connected to each other in a wired or wireless manner, and access network devices may be connected to each other in a wired or wireless manner. FIG. 1 is merely a diagram. The communication system 1000 may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in embodiments of this application.

In embodiments of this application, an apparatus configured to implement functions of the access network device may be an access network device; or may be an apparatus, for example, a chip system, a hardware circuit, a software module, or a combination of the hardware circuit and the software module, that can support the access network device in implementing the functions. The apparatus may be installed in the access network device or may be used in combination with the access network device. In embodiments of this application, the chip system may include a chip, or may include a chip and another discrete component. For ease of descriptions, the following describes the technical solutions provided in embodiments of this application by using an example in which the apparatus configured to implement the functions of the access network device is an access network device.

The terminal may also be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle-to-everything (vehicle-to-everything, V2X), machine-type communication (machine-type communication, MTC), internet of things (internet of things, IoT), virtual reality, augmented reality, industrial control, self-driving, telemedicine, a smart grid, smart furniture, a smart office, smart wearable, smart transportation, a smart city, or the like. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

In embodiments of this application, an apparatus configured to implement functions of the terminal may be a terminal; or may be an apparatus, for example, a chip system, a hardware circuit, a software module, or a combination of the hardware circuit and the software module, that can support the terminal in implementing the functions. The apparatus may be installed in the terminal or may be used in combination with the terminal. For ease of descriptions, the following describes the technical solutions provided in embodiments of this application by using an example in which the apparatus configured to implement the functions of the terminal is a terminal.

The access network device and the terminal may be at fixed locations, or may be movable. The access network device and/or the terminal may be deployed on land, including indoors or outdoors and handheld or vehicle-mounted; or may be deployed on the water; or may be deployed on an airplane, a balloon, and an artificial satellite in the air. Application scenarios of the access network device and the terminal are not limited in embodiments of this application. The access network device and the terminal may be deployed in a same scenario or different scenarios. For example, the access network device and the terminal are both deployed on land; or the access network device is deployed on land, and the terminal is deployed on the water. Examples are not provided one by one.

Roles of the access network device and the terminal may be relative. For example, a helicopter or an uncrewed aerial vehicle 120i in FIG. 1 may be configured as a mobile access network device. For the terminal 120j that accesses the radio access network 100 through 120i, the terminal 120i is an access network device. However, for the access network device 110a, 120i is a terminal, to be specific, 110a and 120i communicate with each other according to a radio air interface protocol. Alternatively, 110a and 120i communicate with each other by using an interface protocol between access network devices. In this case, for 110a, 120i is also an access network device. Therefore, both the access network device and the terminal may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the terminal.

Communication between an access network device and a terminal, between access network devices, or between terminals may be performed by using a licensed spectrum, an unlicensed spectrum, or both the licensed spectrum and the unlicensed spectrum; may be performed by using a spectrum below 6 gigahertz (gigahertz, GHz); may be performed by using a spectrum above 6 GHz; or may be performed by using both the spectrum below 6 GHz and the spectrum above 6 GHz. A spectrum resource used by wireless communication is not limited in embodiments of this application.

In embodiments of this application, an independent network element, which may be referred to as an artificial intelligence (artificial intelligence, AI) network element, an AI node, or the like, may be introduced into the communication system shown in FIG. 1 to implement an AI-related operation. The AI network element may be directly connected to the access network device in the communication system, or may be indirectly connected to the access network device via a third-party network element. The third-party network element may be a core network element, for example, an authentication management function (authentication management function, AMF) or a user plane function (user plane function, UPF). Alternatively, an AI function, an AI module, or an AI entity may be built in another network element in the communication system to implement an AI-related operation. The another network element may be an access network device, a core network device, a network management system, or the like. In this case, a network element that performs the AI-related operation may be a network element with a built-in AI function. Operation administration and maintenance (operation administration and maintenance, OAM) is used for performing operation, management, maintenance, and the like on the access network device and/or the core network device.

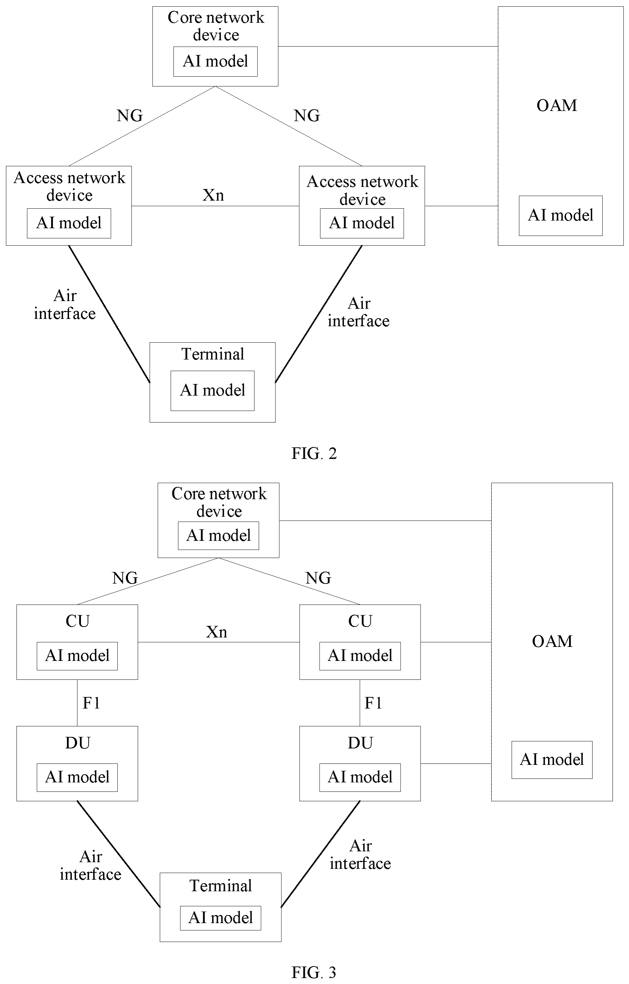

As shown in FIG. 2 or FIG. 3, an AI model may be deployed on at least one of the core network device, the access network device, the terminal, the OAM, or the like, and a corresponding function is implemented by using the AI model. In embodiments of this application, AI models deployed on different nodes may be the same or different. The different models include at least one of the following differences: different structural parameters of the models, for example, different quantities of layers and/or weights of the models, different input parameters of the models, or different output parameters of the models. Different input parameters of the models and/or different output parameters of the models may be described as different functions of the models. Different from FIG. 2, in FIG. 3, the function of the access network device is split into a CU and a DU. Optionally, the CU and the DU may be a CU and a DU in an O-RAN architecture. One or more AI models may be deployed in the CU, and/or one or more AI models may be deployed in the DU. Further, the CU in FIG. 3 may be split into a CU-CP and a CU-UP. Optionally, one or more AI models may be deployed in the CU-CP, and/or one or more AI models may be deployed in the CU-UP. Optionally, in FIG. 2 or FIG. 3, OAM of the access network device and OAM of the core network device may be separately and independently deployed.

In embodiments of this application, the access network device may use the O-RAN architecture. The following describes an example of the O-RAN architecture. This is not intended to limit embodiments of this application.

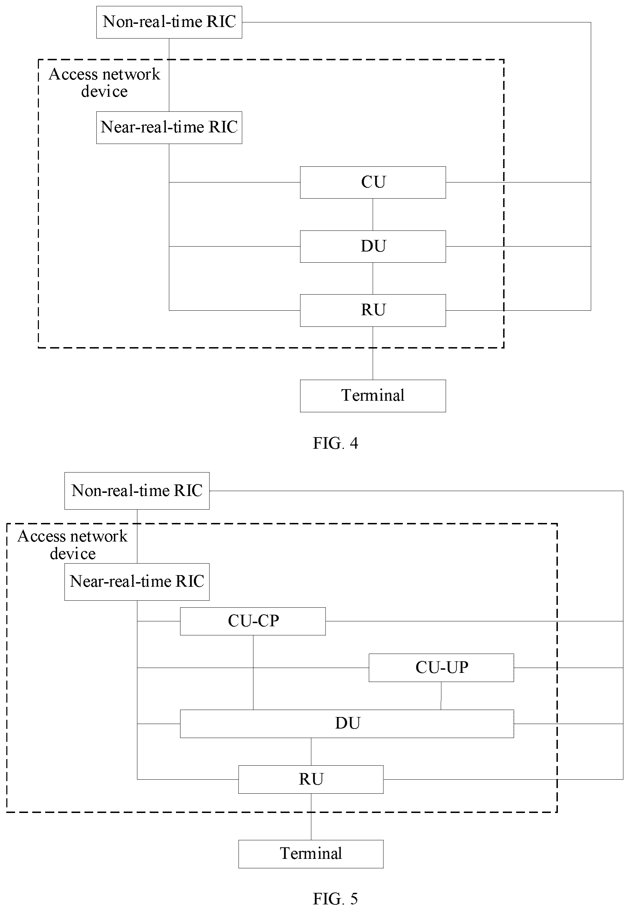

In a first design, refer to FIG. 4. The access network device includes a near-real-time access network intelligent controller (RAN intelligent controller, RIC), a CU, a DU, an RU, and the like. The near-real-time RIC is used for model training and inference. For example, the near-real-time RIC may train an AI model, and use the AI model for inference. For example, the near-real-time RIC may obtain information on a network side or a terminal side from one or more of the CU, the DU, the RU, the terminal, or the like. The information may be used as training data or inference data. For example, the information may be used as training data, and the near-real-time RIC may train the AI model by using the collected training data. Alternatively, the information may be used as inference data, and the near-real-time RIC may perform model inference based on the collected inference data and the AI model, to determine an inference result. Optionally, the near-real-time RIC may send the inference result to one or more of the CU, the DU, the RU, the terminal, or the like. Optionally, the CU and the DU may exchange the inference result. For example, the near-real-time RIC sends the inference result to the CU, and the CU forwards the inference result to the DU. Optionally, the DU and the RU may exchange the inference result. For example, the near-real-time RIC sends the inference result to the DU; the near-real-time RIC sends the inference result to the CU, and the CU forwards the inference result to the DU; or the like. The DU forwards the inference result to the RU.

In the first design, the near-real-time RIC is included in the access network device. Whether a non-real-time RIC is included outside the access network device is not limited. For example, the non-real-time RIC may be included outside the access network device, or the non-real-time RIC may not be included outside the access network device.

In a second design, refer to FIG. 4. A non-real-time RIC is included outside the access network device. For example, the non-real-time RIC may be located in the OAM or the core network device. This is not limited. The non-real-time RIC may train an AI model and use the AI model for inference. Optionally, the non-real-time RIC may collect information on a network side or a terminal side from one or more of the CU, the DU, the RU, the terminal, or the like. The information may be used as training data or inference data. For example, the information is used as training data, and the non-real-time RIC may train the AI model by using the training data. Alternatively, the information is used as inference data, and the non-real-time RIC uses the inference data and the AI model, to determine an inference result. Optionally, the non-real-time RIC may send the inference result to one or more of the CU, the DU, the RU, the terminal, or the like. Optionally, the CU and the DU may exchange the inference result. The DU and the RU may exchange the inference result.

In the second design, the non-real-time RIC is included outside the access network device. Whether a near-real-time RIC is included in the access network device is not limited. For example, the near-real-time RIC may be included in the access network device, or the near-real-time RIC may not be included in the access network device.

In a third design, refer to FIG. 4. A near-real-time RIC is included in the access network device, and a non-real-time RIC is included outside the access network device. Similar to the first design, the near-real-time RIC may perform model training and inference, and/or, similar to the second design, the non-real-time RIC may perform model training and inference, and/or, the non-real-time RIC may perform model training, and the near-real-time RIC may perform model inference. For example, the non-real-time RIC may send a trained AI model to the near-real-time RIC, and the near-real-time RIC uses the AI model for model inference. Optionally, the non-real-time RIC and/or the near-real-time RIC may collect information on a network side or a terminal side from one or more of the CU, the DU, the RU, the terminal, or the like. The information may be used as training data or inference data. For example, the information is used as training data, and the non-real-time RIC trains the AI model by using the training data. The information is used as inference data, and the near-real-time RIC uses the AI model and the inference data, to determine an inference result. Optionally, the near-real-time RIC may send the inference result to one or more of the CU, the DU, the RU, the terminal, or the like. Optionally, the CU and the DU may exchange the inference result. The DU and the RU may exchange the inference result.

FIG. 5 shows another O-RAN architecture according to an embodiment of this application. In comparison with FIG. 4, in FIG. 5, a CU is separated into a CU-CP and a CU-UP.

In this embodiment of this application, a first communication apparatus may perform an AI-related operation based on a first group of reference signal resources. The following describes an AI technology, and the descriptions are not intended to limit this embodiment of this application.

An AI model is a specific implementation of an AI function. The AI model represents a mapping relationship between an input and an output of the model. The AI model may be a neural network, a linear regression model, a decision tree model, a support vector machine (support vector machine, SVM), a Bayesian network, a Q learning model, another machine learning model, or the like. In this embodiment of this application, the AI function may include one or more of the following: data collection (collection of training data and/or inference data), data preprocessing, model training (model learning), model information release (configuration of model information), model verification, model inference, inference result release, or the like. In this embodiment of this application, the AI model may be referred to as a model for short.

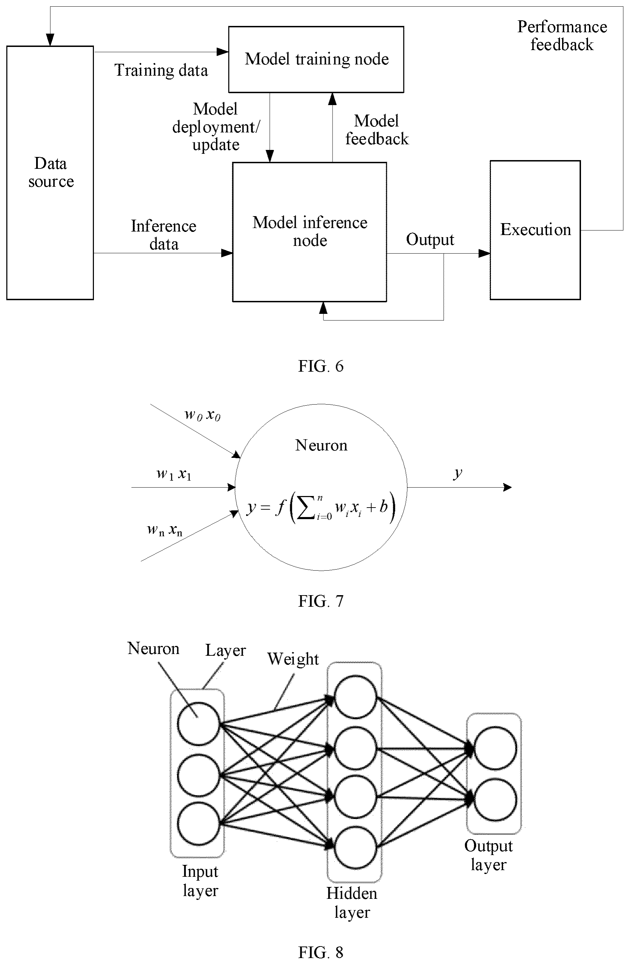

FIG. 6 is a diagram of an application architecture of an AI model. A data source (data source) is configured to store training data and inference data. A model training node (model training host) analyzes or trains training data (training data) provided by the data source to obtain an AI model, and deploys the AI model in a model inference node (model inference host). Optionally, the model training node may further update the AI model that has been deployed on the model inference node. The model inference node may further feed back related information of the deployed model to the model training node, so that the model training node optimizes or updates the deployed AI model, and so on.

That the AI model is obtained through learning by using the model training node is equivalent to that the model training node obtains a mapping relationship between an input and an output of the model through learning based on the training data. The model inference node uses the AI model to perform inference based on inference data provided by the data source, to obtain an inference result. The method may also be described as follows: The model inference node inputs inference data into the AI model, and obtains an output via the AI model. The output is an inference result. The inference result may indicate a configuration parameter used (executed) by an actor object, and/or an operation performed by the actor object. The inference result may be centrally planned by an actor (actor) entity, and sent to one or more actor objects (for example, network entities) for execution. Optionally, the actor entity or the actor object may feed back a parameter or a measurement result of a measurement quantity collected by the actor entity or the actor object to the data source. This process may be referred to as performance feedback, and the fed-back parameter may be used as training data or inference data. Optionally, feedback information related to model performance may be further determined based on the inference result that is output by the model inference node, and the feedback information is fed back to the model inference node; and the model inference node may feed back performance information of the model to the model training node based on the feedback information, so that the model training node performs optimization, update, or the like on the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate to any continuous function, so that the neural network has a capability of learning arbitrary mapping. Therefore, the neural network can accurately perform abstract modeling for a complex high-dimension problem.

The idea of the neural network comes from a neuron structure of brain tissue. Each neuron performs a weighted summation operation on input values of the neuron, and outputs a result of weighted summation through an activation function. FIG. 7 is a diagram of a structure of a neuron. It is assumed that inputs of the neuron are $x = [x_0, x_1, \dots, x_n]$, weights corresponding to the inputs are $w = [w, w_1, \dots, w_n]$ respectively, and an

offset of weighted summation is b. A form of an activation function may be diversified. Assuming that an activation function of a neuron is y = f(z) = max(0, z), an output of the neuron is

$$y = f\left(\sum_{i=0}^{i=n} w_i * x_i + b\right) = max\left(0, \sum_{i=0}^{i=n} w_i * x_i + b\right).$$

. For another example, if an activation function of a neuron is y = f(z) = z, an output of the neuron is

$$y = f\left(\sum_{i=0}^{i=n} w_i * x_i + b\right) = \sum_{i=0}^{i=n} w_i * x_i + b$$

. $x_i$, $w_i$, and b may be of various possible values such as decimals, integers (including 0, positive integers, negative integers, or the like), or complex numbers. Activation functions of different neurons in a neural network may be the same or different.

The neural network generally includes a multilayer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 8 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. After performing neuron processing on a received input, the input layer of the neural network transfers a result to the intermediate hidden layer, then the hidden layer transfers a calculation result to the output layer or an adjacent hidden layer, and finally, the output layer obtains an output result of the neural network. One neural network may include one hidden layer or multiple hidden layers that are connected in sequence. This is not limited. During training of the neural network, a loss function may be defined. The loss function describes a gap or difference between an output value and an ideal target value of the neural network. A specific form of the loss function is not limited in this embodiment of this application. A training process of the neural network is a process of adjusting a parameter of the neural network, such as a quantity of layers and a width of the neural network, a weight of a neuron, and/or a parameter in an activation function of the neuron, so that a value of the loss function is less than a threshold or meets a target requirement.

With development of a 5G communication system, a used spectrum gradually evolves to a high frequency band. Due to a physical transmission characteristic, a free space transmission loss and a penetration loss of the high frequency band are significantly higher than those of a low frequency band. To compensate for the foregoing disadvantages, a large antenna array is usually used in the high frequency band to resist received signal attenuation caused by the losses. Antenna beamforming is used to concentrate energy in a narrow beam, so that network coverage can be effectively improved, and user experience is improved.

The narrow beam has an effect similar to a spotlight, and converges limited transmission energy in a narrow direction, so that a coverage area of an access network device can be greatly improved. The narrow beam also brings huge beam management overheads while improving coverage. The access network device needs more narrow beams to cover all space. To select a beam most suitable for a terminal, the terminal needs to traverse a large quantity of candidate beams. As a result, huge beam management overheads are caused.

For example, that the terminal selects the beam most suitable for the terminal is also referred to as beam alignment, and includes three phases: A first phase is coarse alignment. For example, a wide beam is configured by the access network device. The terminal sweeps all wide beams to obtain measurement results corresponding to the wide beams, and finds an optimal wide beam. In a second phase, a narrow beam is configured within a coverage area of the wide beam or a corresponding range around the wide beam. The terminal sweeps the narrow beam to obtain an optimal narrow beam. A third phase mainly relates to a beam maintenance and beam recovery process. This does not relate to this embodiment of this application, and is not described in detail.

An AI technology is introduced to significantly reduce beam sweeping overheads. For example, the access network device sends a reference signal by using a transmit beam, and the terminal receives the reference signal by using different beams, and measures a reference signal received by using each beam, to determine a measurement result. The measurement result may be reference signal received power (reference signal received power, RSRP), reference signal received quality (reference signal received quality, RSRQ), a signal to interference plus noise ratio (signal to interference plus noise ratio, SINR), or the like. In a design, an AI model may be pre-trained, and the AI model may predict an optimal receive beam. In an implementation, one or more beams at fixed locations are selected from all beams, and a measurement result of the one or more beams at the fixed locations is used as an input of the AI model. The optimal receive beam may be determined based on an output of the AI model. This solution is referred to as a fixed pattern solution below. In another implementation, several beams may be randomly selected from all beams, and a measurement result of the randomly selected beam is used as an input of the AI model. The optimal receive beam may be determined based on an output of the AI model. This solution is referred to as a random pattern solution below.

For the fixed pattern solution, a beam is blocked during beam sweeping. When the terminal performs beam sweeping on a beam at a fixed location, the beam is blocked, and a measurement result of the blocked beam cannot be extracted. Consequently, accuracy of an optimal beam obtained through inference is low. Further, a fixed pattern is configured by the access network device for the terminal. When the terminal performs cell handover, where for example, a source cell belongs to an access network device 1, and a target cell belongs to an access network device 2, the access network device 1 and the access network device 2 may respectively configure fixed patterns for the terminal. The fixed patterns configured by the access network device 1 and the access network device 2 may be different. Consequently, the AI model may not match the fixed patterns, and inference performance of the AI model is affected. For example, during model training, the AI model is trained by using a fixed pattern 1. For the fixed pattern 1, the AI model may implement good inference performance. If the access network device 2 configures a fixed pattern 2 for the terminal during cell handover, where the fixed pattern 2 is different from the fixed pattern 1, the terminal performs AI inference by using the fixed pattern 2, and accuracy of an optimal receive beam obtained through inference may be low.

For the random pattern solution, during training of the AI model, convergence of the AI model depends on feature extraction. The AI model establishes a correspondence between an input and an output. Random and irregular patterns may make it difficult for the AI model to converge. In other words, the AI model cannot achieve ideal inference performance.

In view of this, an embodiment of this application provides a solution, to improve accuracy of predicting an optimal receive beam. The solution includes: A first communication apparatus determines a first group of reference signal resources from multiple groups of reference signal resources. The first communication apparatus determines a first reference signal resource based on the first group of reference signal resources and a model. The first communication apparatus may be a terminal, or a chip, a circuit, or the like used in the terminal. This is not limited. In this embodiment of this application, there is a correspondence between a reference signal resource and a beam. Therefore, the reference signal resource may be used to represent the beam. In other words, the beam and the reference signal resource in the following may represent a same concept, and may be used alternatively. In other words, in this embodiment of this application, the terminal may determine a group of beams from multiple groups of beams, where the group of beams may be referred to as a first group of beams; and perform model inference based on the first group of beams, to determine a beam that meets a condition. The beam that meets a condition may be an optimal receive beam. In comparison with an existing solution in which model inference is performed based on beams at several fixed locations to predict an optimal receive beam, in this solution, a group of appropriate beams may be selected from the multiple groups of beams. For example, an access network device selects a group of beams that do not block each other, and indicates the selected group of beams to the terminal, so that a case in which the terminal cannot extract a measurement result of a beam can be avoided, and accuracy of an optimal receive beam obtained through inference is improved.

Further, the multiple groups of beams may be used to pre-train an AI model used as a model for inferring/predicting an optimal receive beam. In this way, the AI model can implement accurate inference performance for any one of the multiple groups of beams. For example, in the foregoing solution of predicting or inferring the optimal receive beam based on the fixed location, a model is trained based on the fixed location. The access network device configures a fixed location for the terminal. If the fixed location configured by the access network device is different from the fixed location used for model training, a problem, for example, low accuracy of an optimal receive beam obtained through inference or prediction, may be caused. In the solution of this application, the model is trained by using the multiple groups of beams, and accurate inference or prediction of an optimal receive beam may be implemented regardless of which group of beams is selected from the multiple groups of beams. In addition, in this application, the AI model is trained by using the multiple groups of beams, so that convergence performance of the trained AI model can be better, and the AI model can achieve ideal inference performance.

For ease of understanding, the following describes and/or explains a concept of a beam. The descriptions and/or explanations are not intended to limit this embodiment of this application.

The beam is a special directional sending or receiving effect formed by a transmitter or a receiver of an access network device or a terminal by using an antenna array, and is similar to a flashlight converging light to a direction to form a beam of light. Signal sending and receiving in the form of the beam can effectively increase a signal transmission distance.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam generally corresponds to a resource. For example, during beam measurement, the access network device measures different beams by using different resources, the terminal feeds back measured resource quality, and the access network device learns of quality of a corresponding beam. During data transmission, beam information is also indicated by a resource corresponding to the beam information. For example, the access network device indicates a transmission configuration indicator-state (transmission configuration indicator, TCI, TCI-state) by using a transmission configuration indicator (transmission configuration indicator, TCI) in downlink control information (down control information, DCI), and the terminal determines, based on a reference signal resource included in the TCI-state, to use a beam corresponding to the reference resource.

In a communication protocol, a beam may be specifically represented as a reference signal resource, a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmit beam (transmit beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a receive beam (receive beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like. In the following descriptions of embodiments of this application, a beam is described as a reference signal resource.

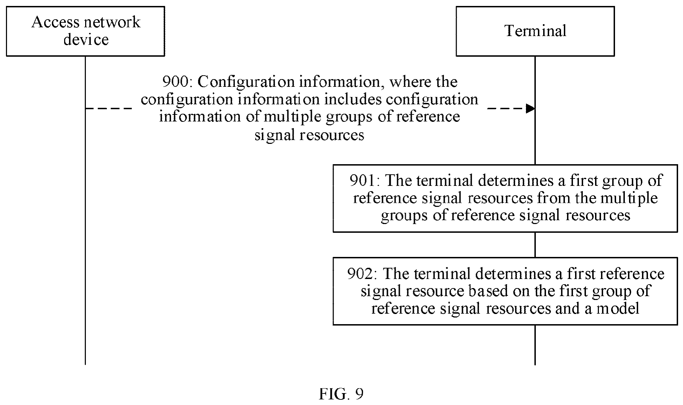

For example, a first communication apparatus is a terminal, and a second communication apparatus is an access network device. As shown in FIG. 9, a procedure is provided, and includes the following steps.

Step 901: The terminal determines a first group of reference signal resources from multiple groups of reference signal resources.

In a design, the multiple groups of reference signal resources include the first group of reference signal resources, and further include a group of reference signal resources other than the first group of reference signal resources. Each of the multiple groups of reference signal resources includes at least one reference signal resource. Quantities of reference signal resources included in different groups of reference signal resources in the multiple groups of reference signal resources may be the same or different. This is not limited. For example, the quantities of reference signal resources included in different groups of reference signal resources may be the same. For example, the multiple groups of reference signal resources include the first group of reference signal resources and a second group of reference signal resources. The first group of reference signal resources and the second group of reference signal resources each include 16 reference signal resources. Alternatively, the first group of reference signal resources includes 16 reference signal resources, and the second group of reference signal resources includes 32 reference signal resources.

In a design, the multiple groups of reference signal resources belong to a subset of a reference signal resource universal set. For example, the reference signal resource universal set includes 64 reference signal resources. Each of the multiple groups of reference signal resources may include 16 reference signal resources. The 16 reference signal resources belong to the 64 reference signal resources. For example, if numbers of the 64 reference signal resources are 0 to 63, a group of reference signal resources may include any 16 reference signal resources in the 64 reference signal resources. In a description, because each group of reference signal resources includes a part of reference signal resources in the reference signal resource universal set, in other words, a group of beams includes a part of beams in a beam universal set, a group of reference signal resources is also referred to as a group of sparse beams, a sparse beam pattern, or the like.

The multiple groups of reference signal resources may be specified in a protocol, preset, configured by the access network device for the terminal, even determined and configured by the terminal for the access network device, or the like. An example in which the access network device configures the multiple groups of reference signal resources for the terminal is used. Before step 901, the procedure may further include the following steps. Step 900: The access network device sends configuration information to the terminal, and the terminal receives the configuration information from the access network device, where the configuration information includes configuration information of the multiple groups of reference signal resources. Further, the terminal determines the multiple groups of reference signal resources based on the configuration information of the multiple groups of reference signal resources.

Step 902: The terminal determines a first reference signal resource based on the first group of reference signal resources and a model.

For example, the first reference signal resource may be a reference signal resource that meets a condition. Optionally, the reference signal resource that meets a condition may be a reference signal resource corresponding to an optimal receive beam of the terminal. The model is configured to predict the reference signal resource that meets a condition. The model may also be referred to as an AI model, a first model, or the like. This is not limited. The model may be specified in a protocol, preset, trained and configured by another device for the terminal, trained by the terminal, or the like. The another device includes the access network device, a core network device, OAM, or the like.

In a design, the terminal measures the first group of reference signal resources to obtain a measurement result of the first group of reference signal resources. The terminal determines an input of the model based on the measurement result of the first group of reference signal resources. The terminal determines an output of the model based on the input of the model and the model. The terminal determines the first reference signal resource based on the output of the model. For example, if the first group of reference signal resources includes 16 reference signal resources, the terminal measures reference signals corresponding to the 16 reference signal resources included in the first group of reference signal resources, to obtain measurement results of the 16 reference signal resources. Optionally, the reference signal may be a synchronization signal block (synchronization signal block, SSB), a channel state information-reference signal (channel state information-reference signal, CSI-RS), or the like, and the measurement result may be RSRP, RSRQ, an SINR, or the like. The terminal inputs the measurement results of the 16 reference signals into the model, and determines the first reference signal resource based on the output of the model. For example, the output of the model may be directly the first reference signal resource, or the output of the model is processed to obtain the first reference signal resource.

For example, when the model is trained by using a classification training method, the output of the model is a probability that each reference signal resource becomes the reference signal resource that meets a condition. For example, if the reference signal resource universal set includes 64 reference signal resources, the output of the model is a probability that each reference signal resource in the 64 reference signal resources becomes the reference signal resource that meets a condition. The terminal selects a reference signal resource with a highest probability as the reference signal resource that meets a condition, in other words, as the first reference signal resource. Alternatively, when the model is trained by using a regression training method, the output of the model is a predicted measurement result corresponding to each reference signal resource. The terminal selects a reference signal resource with a largest measurement result value as the reference signal resource that meets a condition, in other words, as the first reference signal resource.

In a design, the input of the model includes N input ports, and the first group of reference signal resources includes M reference signal resources. In this case, the terminal obtains measurement results of the M reference signals. When a value of N is equal to a value of M, the terminal inputs the M measurement results into the N input ports of the model. For example, if each of the multiple groups of reference signal resources includes a same quantity of reference signal resources, for example, 16 reference signal resources, the model may include 16 input ports, and the values of N and M are both 16. Alternatively, when a value of N is greater than a value of M, the terminal may input the M measurement results into corresponding locations in the N input ports, and input a preset value into remaining N-M input ports. The preset value may be zero, a measurement value other than zero, or the like. For example, if the first group of reference signal resources includes 16 reference signal resources, the terminal obtains measurement results of 16 reference signals. In this case, the value of M is 16. If the reference signal resource universal set includes 64 reference signal resources, the model includes 64 input ports. In this case, the value of N is 64. In this case, the terminal inputs the measurement results of the 16 reference signals into 16 input ports in the model, and inputs a preset value into remaining 48 input ports.

According to the foregoing design, the terminal determines the first group of reference signal resources from the multiple groups of reference signal resources. The terminal performs model inference by using the first group of reference signal resources, to resolve a problem, for example, low accuracy of an inference result caused by a failure to extract a measurement result of a blocked beam in a design of a fixed pattern, and further resolve a problem, for example, low accuracy of an inference result caused by poor convergence of a model trained by using a random pattern. In other words, the solution in this embodiment of this application can improve accuracy of the inference result.

**[Embodiment 1]**

In a design, that the terminal determines the first group of reference signal resources from the multiple groups of reference signal resources includes: The terminal receives first indication information from the access network device, where the first indication information includes indication information of the first group of reference signal resources. The terminal determines the first group of reference signal resources from the multiple groups of reference signal resources based on the first indication information.

For example, the multiple groups of reference signal resources include at least two groups of reference signal resources, and the two groups of reference signal resources may use various encoding manners. For example, the multiple groups of reference signal resources may use encoding manners, such as a decimal system, a binary system, another numeral system (for example, an octal system or a hexadecimal system), a Greek alphabet (for example, $\alpha$, $\beta$, $\gamma$, or $\delta$), and a case-sensitive letter (for example, a, A, b, or B). Decimal encoding is used as an example. Encoding of the multiple groups of reference signal resources may be sequentially 1, 2, 3, 4, and the like. The first indication information may indicate any one of the multiple groups of reference signal resources, and the group of reference signal resources indicated by the first indication information is referred to as the first group of reference signal resources. The first indication information may explicitly indicate the first group of reference signal resources. For example, the first indication information includes number information of the first group of reference signals. Alternatively, the first indication information may implicitly indicate the first group of reference signal resources. For example, if there is a correspondence between the multiple groups of reference signal resources and other information, the first indication information may include the other information. The terminal may obtain, through inference based on the other information, the first group of reference signal resources that has the correspondence with the other information.

For example, the multiple groups of reference signal resources include four groups of reference signal resources. The four groups of reference signal resources may be specified in a protocol, predefined, configured by the access network device for the terminal, even configured by the terminal for the access network device, or the like. This is not limited. An example in which the access network device configures four groups of reference signal resources for the terminal is used. The access network device may preconfigure the four groups of reference signal resources for the terminal. Then, the access network device may send the first indication information to the terminal, where the first indication information may indicate any one of the four groups of reference signal resources. For example, numbers of the four groups of reference signal resources are respectively 1, 2, 3, and 4. In this case, when the first indication information includes indication information "1", the terminal may determine that the access network device indicates a 1st group of reference signal resources, in other words, the first group of reference signal resources is the 1st group of reference signal resources.

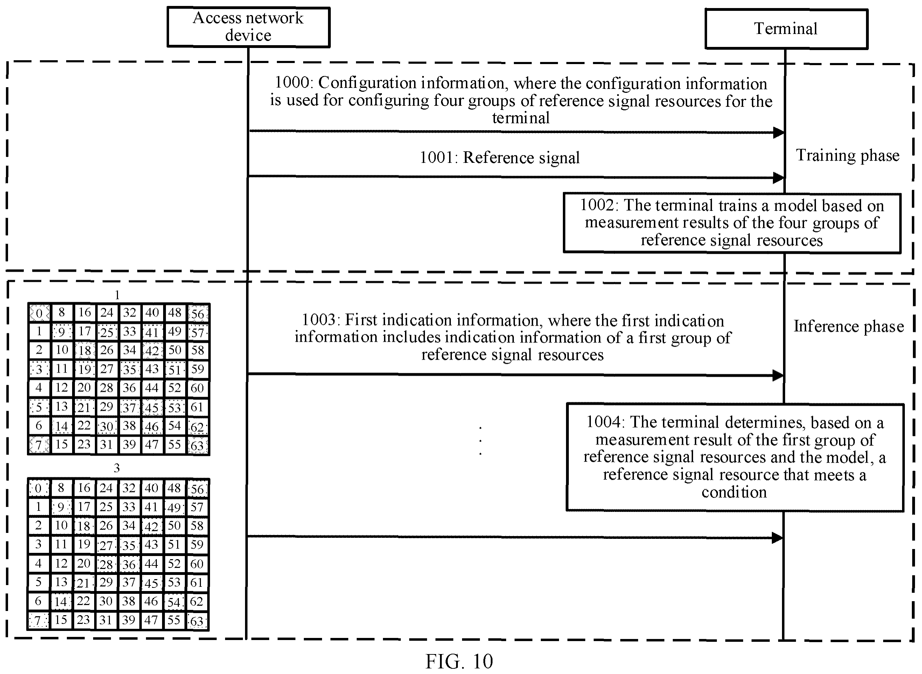

As shown in FIG. 10, a procedure is provided, and mainly includes a training phase and an inference phase. In the training phase (including step 1000 to step 1002 below), an access network device configures four groups of reference signal resources for a terminal, and the terminal trains an AI model based on the four groups of reference signal resources configured by the access network device. In the inference phase (including step 1003 and step 1004 below), the access network device indicates any one of multiple groups of reference signal resources to the terminal, and the any group of reference signal resources is the foregoing first group of reference signal resources. The terminal performs model inference by using the first group of reference signal resources and a trained model. The terminal determines, based on an inference result, a reference signal resource that meets a condition. The procedure in FIG. 10 includes the following steps.

Step 1000: The access network device sends configuration information to the terminal, where the configuration information is used for configuring the four groups of reference signal resources for the terminal.

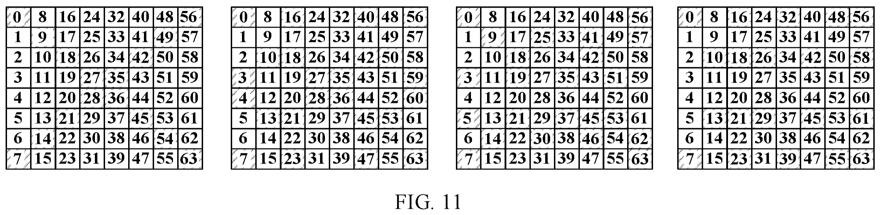

For example, a reference signal resource universal set includes 64 reference signal resources, and numbers of the reference signal resources are sequentially 0 to 63. Each of the four groups of reference signal resources includes 16 reference signal resources, and the 16 reference signal resources belong to the 64 reference signal resources. One example is given as the following: numbers of reference signal resources included in a 1st group of reference signal resources are [0, 7, 9, 14, 18, 21, 27, 28, 35, 36, 42, 45, 49, 54, 56, 63], numbers of reference signal resources included in a 2nd group of reference signal resources are [3, 4, 10, 13, 16, 23, 27, 28, 35, 36, 40, 47, 50, 53, 59, 60], numbers of reference signal resources included in a 3rd group of reference signal resources are [3, 5, 9, 14, 19, 21, 25, 30, 35, 37, 41, 46, 51, 53, 57, 62], and numbers of reference signal resources included in a 4th group of reference signal resources are [0, 7, 10, 13, 16, 23, 26, 29, 32, 39, 42, 45, 48, 55, 58, 61]. Another example is given as shown in FIG. 11, numbers of reference signal resources included in a 1st group of reference signal resources are [0, 7, 9, 14, 18, 21, 27, 28, 35, 36, 42, 45, 49, 54, 56, 63], numbers of reference signal resources included in a 2nd group of reference signal resources are [0, 3, 4, 7, 10, 13, 16, 18, 21, 23, 27, 28, 35, 36, 40, 45, 47, 50, 53, 56, 59, 60, 63], numbers of reference signal resources included in a 3rd group of reference signal resources are [0, 3, 5, 7, 9, 14, 18, 19, 21, 25, 30, 35, 37, 41, 42, 45, 46, 51, 53, 56, 57, 62, 63], and numbers of reference signal resources included in a 4th group of reference signal resources are [0, 7, 10, 13, 16, 18, 21, 23, 26, 29, 32, 39, 42, 45, 48, 55, 56, 58, 61, 63].

In a design, the multiple groups of reference signal resources are defined and configured on an access network side, and each group of reference signal resources is assigned with an independent number. After the terminal accesses a network, the access network device configures the multiple groups of reference signal resources for the terminal. For example, the access network device may configure each group of reference signal resources for the terminal by using a bitmap. The bitmap may include 64 bits. The 64 bits are respectively 0 to 63 bits, and the 64 bits respectively represent 64 reference signal resources in the reference signal resource universal set. A bit in the 64 bits is 1, indicating that a corresponding reference signal resource exists at the bit. The bit is 0, indicating that no corresponding reference signal resource exists at the bit. Certainly, the opposite is also possible. The bit is 1, indicating that no corresponding reference signal resource exists at the bit. The bit is 0, indicating that a corresponding reference signal resource exists at the bit. Alternatively, the terminal defines the multiple groups of reference signal resources, and notifies the access network device of the multiple groups of reference signal resources, so that when supporting inference, the access network device indicates a corresponding first group of reference signal resources based on the multiple groups of reference signal resources. Similar to the foregoing design, the terminal may notify the access network device of each group of reference signal resources by using a bitmap. Certainly, in the procedure in FIG. 10, an example in which the access network device configures four groups of reference signal resources for the terminal is used.

Step 1001: The access network device sends a reference signal to the terminal.

Optionally, the reference signal may be a reference signal in the universal set. For example, the reference signal may include 64 reference signals corresponding to the foregoing 64 reference signal resources. The terminal sweeps (or measures) the 64 reference signals, and determines measurement results of the 64 reference signals. This process may be referred to as a full-codebook sweep.

Step 1002: The terminal trains a model based on measurement results of the four groups of reference signal resources.

For example, the terminal may obtain a measurement result of each of the 64 reference signals. Further, a measurement result corresponding to each of the four groups of reference signal resources is determined based on the measurement results of the 64 reference signals. The model is trained by using the measurement results of the four groups of reference signal resources. The model training process includes at least one round. For example, during a first round of model training, the terminal trains an initial model by using the measurement results of the four groups of reference signal resources. The initial model may be specified in a protocol, preset, configured by another device for the terminal, or the like. This is not limited. For example, during training, the measurement results of the four groups of reference signal resources may be separately input into the initial model. An output of the initial model is compared with a label, and the label is an ideal output of the model. If a difference between the output of the initial model and the label is greater than or equal to a threshold, a parameter of the initial model is adjusted. A neural network is used as an example. The adjusted parameter of the initial model includes at least one of the following: a quantity of layers and a width of the neural network, a weight of a neuron, a parameter in an activation function of the neuron, and/or the like. In a design, a loss function may be defined, and a difference between an output of a model and a label may be determined by using the loss function. During a second round of model training, model training may continue to be performed, by using the measurement results corresponding to the four groups of reference signal resources, on a model obtained through the first round of model training. Similar to the first round of model training, the second round of model training is not described again. During each round of model training, the terminal may determine whether a difference between an output of a model and a label is less than a threshold. If the difference is less than the threshold, model training stops, and model training is completed. If the difference is greater than or equal to the threshold, a next round of model training continues.

In a design, the terminal trains a model by using a classification training method. For example, an input of the model is the measurement results corresponding to the four groups of reference signal resources, and the output of the model is a probability that each reference signal resource in all predicted reference signal resources becomes a reference signal resource that meets a condition. The label is a reference signal resource that actually meets a condition. During each round of model training, the terminal compares whether the output of the model matches the label. For example, if a preset reference signal resource with a highest probability of meeting a condition of the model is the same as the reference signal resource in the label, model training stops. Otherwise, a next round of model training continues.

In a design, the terminal trains a model by using a regression training method. For example, the input of the model is the measurement results corresponding to the four groups of reference signal resources, and the output of the model is a predicted measurement result corresponding to each reference signal resource in all reference signal resources. For example, the measurement result may be RSRP. The label may be an actual measurement result corresponding to each reference signal resource. The terminal compares the predicted measurement result with the actual measurement result in the label. If a difference between the predicted measurement result and the actual measurement result is less than the threshold, model training stops. Otherwise, model training continues.

During model training, the terminal may need multiple rounds of model training, so that the model meets an inference requirement. A condition for meeting the inference requirement may be: For each of the four groups of reference signal resources, the model can achieve ideal inference performance. For example, for each group of reference signal resources, a difference between a predicted inference result and the label is less than the threshold.

Certainly, in the foregoing descriptions, an example in which the terminal trains a model is used for description. Alternatively, a model may be trained and configured by another device for the terminal. The another device includes the access network device, a core network device, OAM, or the like. A process of training a model by the another device is similar to a process of training a model by the terminal. A difference lies in that the terminal may need to report, to the another device, the measurement result corresponding to each group of reference signal resources that are measured, and the another device performs model training based on the measurement result corresponding to each group of reference signal resources. In a design, the access network device may train a model, and send a trained model to the terminal. For the design, it is mainly considered that a terminal side has a limitation on a computing capability, and may fail to support model training.

Step 1003: The access network device sends first indication information to the terminal, where the first indication information includes indication information of the first group of reference signal resources.

In a design, the access network device sends indication information of any one of the four groups of reference signal resources to the terminal. The any group of reference signal resources is referred to as the first group of reference signal resources. Alternatively, the access network device determines a group of reference signal resources from the four groups of reference signal resources, and indicates the determined group of reference signal resources to the terminal. The determined group of reference signal resources is referred to as the first group of reference signal resources. For example, no beam corresponding to a reference signal resource included in the group of reference signal resources determined by the access network device is blocked, or a group of reference signal resources may be determined based on another condition. This is not limited. For example, the access network device may indicate the first group of reference signal resources to the terminal by using a CSI-report configuration CSI-ReportConfig, a CSI-resource configuration CSI-resourceConfig, and the like. For example, CSI-ReportConfig and CSI-resourceConfig may include the indication information of the first group of reference signal resources.

Step 1004: The terminal determines, based on a measurement result of the first group of reference signal resources and the model, a reference signal resource that meets a condition.

In a design, the terminal performs beam sweeping to determine a measurement result of each reference signal resource included in the first group of reference signal resources, which may be referred to as the measurement result of the first group of reference signal resources for short. The terminal inputs the measurement result of the first group of reference signal resources into the model. For example, the first group of reference signal resources includes 16 reference signal resources, and the terminal may determine measurement results of the 16 reference signal resources. The model may include 64 input ports, and the terminal may input the 16 measurement results of the first group of reference signal resources into 16 input ports corresponding to the model. For remaining 48 output ports of the model, a preset value may be input. This process may be referred to as interpolation completion. The terminal may determine, based on an output of the model, a first reference signal resource that meets a condition. For example, in the classification training method, the output of the model is a probability that each reference signal resource becomes the reference signal resource that meets a condition. A reference signal resource with a highest probability may be selected from the output of the model, and the reference signal resource with the highest probability is the first reference signal resource that meets a condition. Alternatively, in the regression training method, the output of the model is a measurement result of each reference signal resource. A reference signal resource with a largest measurement result value may be selected from the output of the model, and the reference signal resource with the largest value is the first reference signal resource that meets a condition. In a description, there is a correspondence between a reference signal resource and a beam, and that the terminal determines the first reference signal resource that meets a condition includes that the terminal determines a beam that meets a condition. Optionally, the beam that meets a condition may be an optimal receive beam of the terminal. For example, if the access network device sends downlink information to the terminal, the terminal receives the downlink information by using the optimal receive beam.

It may be understood that, in different model inference processes, the access network device may indicate reference signal resources of a same group or different groups to the terminal, and the like. This is not limited. For example, during a first time of model inference, the access network device indicates a 1st group of reference signal resources in the four groups of reference signal resources to the terminal. During a second time of model inference, the access network device indicates a 2nd group of reference signal resources in the four groups of reference signal resources to the terminal, or the access network device may indicate the 1st group of reference signal resources again to the terminal, or the like. In the procedure in FIG. 10, an example in which the access network device indicates the 1st group of reference signal resources to the terminal during the first time of model inference, and the access network device indicates a 3rd group of reference signal resources to the terminal during the second time of model inference is used for description.

According to the foregoing design, during model training, one model is trained for the multiple groups of reference signal resources, and the model is converged for the multiple groups of reference signal resources. During model inference, the access network device indicates any one of the multiple groups of reference signal resources to the terminal, and the terminal performs model inference based on the indicated group of reference signal resources, to determine the reference signal resource that meets a condition. According to the foregoing design, accuracy of model inference can be improved.

**[Embodiment 2]**

In a design, that the terminal determines the first group of reference signal resources from the multiple groups of reference signal resources includes: The terminal receives second indication information from the access network device, where the second indication information includes indication information of at least one reference signal resource included in the first group of reference signal resources. The terminal determines the first group of reference signal resources from the multiple groups of reference signal resources based on the second indication information.

A difference from Embodiment 1 lies in that, during model inference, the access network device indicates, to the terminal, the reference signal resource included in the first group of reference signal resources. Because each group of reference signal resources includes different reference signal resources, the terminal may determine, based on the reference signal resource indicated by the access network device, the first group of reference signal resources indicated by the access network device. For example, four groups of reference signal resources are respectively [0, 7, 9, 14, 18, 21, 27, 28, 35, 36, 42, 45, 49, 54, 56, 63], [3, 4, 10, 13, 16, 23, 27, 28, 35, 36, 40, 47, 50, 53, 59, 60], [3, 5, 9, 14, 19, 21, 25, 30, 35, 37, 41, 46, 51, 53, 57, 62], and [0, 7, 10, 13, 16, 23, 26, 29, 32, 39, 42, 45, 48, 55, 58, 61]. If the reference signal resource indicated by the access network device to the terminal is [0, 7, 9, 14, 18, 21, 27, 28, 35, 36, 42, 45, 49, 54, 56, 63], the terminal may determine that the access network device indicates the 1st group of reference signal resources. The terminal may perform model inference by using the 1st group of reference signal resources.

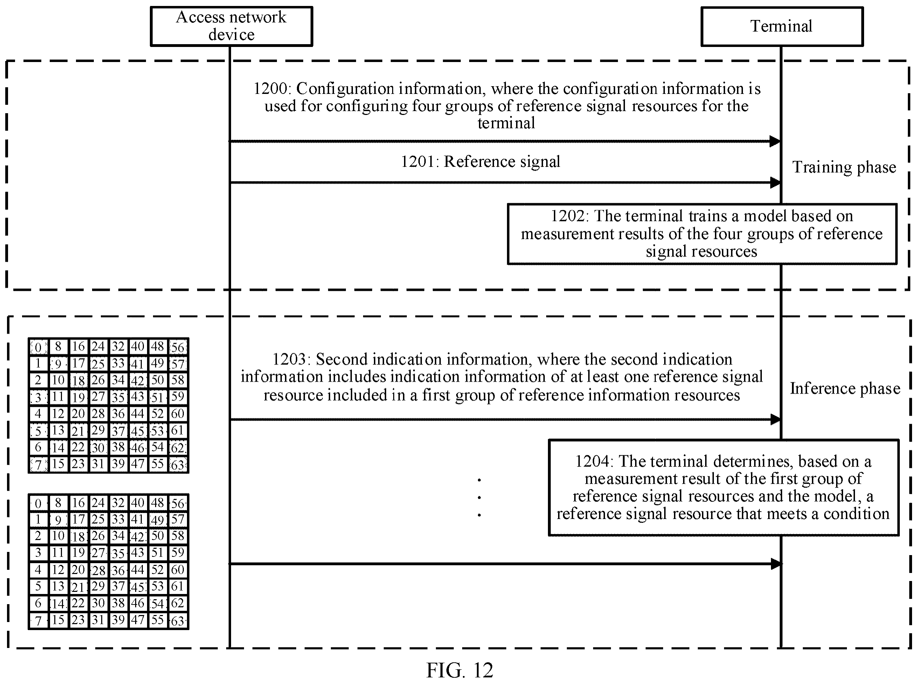

As shown in FIG. 12, a procedure is provided. In the procedure, an example in which an access network device configures four groups of reference signal resources for a terminal, and the terminal trains a model is used. The procedure in FIG. 12 includes a training phase and an inference phase. The training phase includes step 1200 to step 1202 below, and the inference phase includes step 1203 and step 1204 below. The procedure in FIG. 12 includes the following steps.

Step 1200: The access network device sends configuration information to the terminal, where the configuration information is used for configuring the four groups of reference signal resources.

In a design, the access network device defines the four groups of reference signal resources. When the terminal accesses a network, the access network device may configure the four groups of reference signal resources for the terminal. Optionally, the four groups of reference signal resources may not have corresponding numbers. When configuring the four groups of reference signal resources for the terminal, the access network device may configure a bitmap of each group of reference signal resources. The terminal may determine, by using the bitmap, a reference signal resource specifically included in each group of reference signal resources. Alternatively, the terminal defines the four groups of reference signal resources. When the terminal accesses a network, the terminal notifies the access network device of the four groups of reference signal resources, so that the access network device indicates a first group of reference signal resources to the terminal in the inference phase. Certainly, in the procedure in FIG. 12, an example in which the access network device configures four groups of reference signal resources for the terminal is used for description.

It may be understood that, in Embodiment 2, an identifier of a reference signal resource included in each group of reference signal resources may be a global identifier, and the global identifier may be considered as an identifier of a reference signal resource in a reference signal resource universal set. For example, a group of reference signal resources includes 16 reference signal resources. In the reference signal resource universal set, identifiers of the 16 reference signal resources are [0, 7, 9, 14, 18, 21, 27, 28, 35, 36, 42, 45, 49, 54, 56, 63], indicating that the group of reference signal resources specifically includes reference signal resources numbered 0, 7, 9, 14, 18, 21, 27, 28, 35, 36, 42, 45, 49, 54, 56, and 63 in the reference signal resource universal set. In Embodiment 1, an identifier of a reference signal resource included in each group of reference signal resources may be a global identifier, or may be another identifier, and the another identifier may be an identifier independent of the reference signal resource universal set. For example, in Embodiment 1, a group of reference signal resources includes 16 reference signal resources, and identifiers of the 16 reference signal resources are 0 to 15.

Step 1201: The access network device sends a reference signal to the terminal.

Optionally, the reference signal may be a reference signal in the universal set. For example, if the reference signal in the universal set includes 64 reference signals, the access network device may separately send the 64 reference signals to the terminal.

Step 1202: The terminal trains a model based on measurement results of the four groups of reference signal resources.

It may be understood that step 1202 may also be replaced with the following: The access network device trains a model based on measurement results of the four groups of reference signal resources. When the terminal accesses the network, the access network device sends a trained model to the terminal.

Step 1203: The access network device sends second indication information to the terminal, where the second indication information includes indication information of at least one reference signal resource included in the first group of reference signal resources.

For example, the second indication information may include a global identifier of the at least one reference signal resource included in the first group of reference signal resources. Because each group of reference signal resources includes different reference signal resources, the terminal may determine, based on the reference signal resource indicated by the access network device, a group of reference signal resources that include the reference signal resource indicated by the access network device, where the group of reference signal resources is the first group of reference signal resources.

Step 1204: The terminal determines, based on a measurement result of the first group of reference signal resources and the model, a reference signal resource that meets a condition.

Optionally, in different model inference processes, the access network device indicates reference signal resources of a same group or different groups to the terminal.

According to the foregoing design, in the training phase, the terminal trains the model by using the four groups of reference signal resources. In the inference phase, the access network device sends indication information of a group of reference signal resources to the terminal, and the terminal performs model inference by using the indicated group of reference signal resources and the model, to determine a reference signal resource that meets a condition, so that a balance between AI inference performance and generalization can be achieved.

It may be understood that, to implement functions in the foregoing embodiments, the access network device and the terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

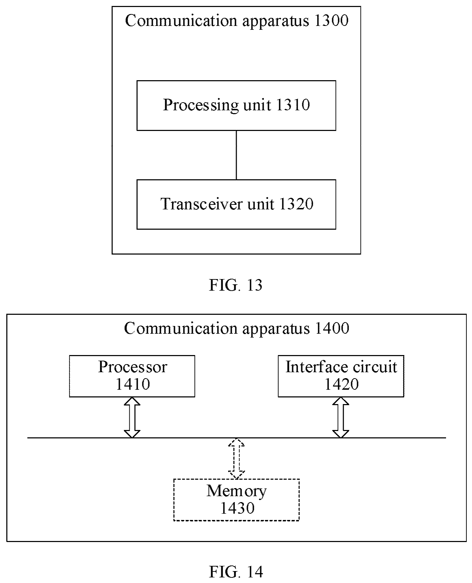

FIG. 13 and FIG. 14 are diagrams of structures of possible communication apparatuses according to embodiments of this application. These communication apparatuses may be configured to implement functions of the terminal device or the access network device in the foregoing method embodiments. Therefore, beneficial effects of the foregoing method embodiments can also be achieved. In embodiments of this application, the communication apparatus may be one of the terminals 120a to 120j shown in FIG. 1, may be the access network device 110a or 110b shown in FIG. 1, or may be a module (for example, a chip) used in the terminal or the access network device.

As shown in FIG. 13, the communication apparatus 1300 includes a processing unit 1310 and a transceiver unit 1320. The communication apparatus 1300 is configured to implement functions of the terminal or the access network device in the method embodiment shown in FIG. 9.

When the communication apparatus 1300 is configured to implement the functions of the terminal in the method embodiment shown in FIG. 9, the processing unit 1310 is configured to determine a first group of reference signal resources from multiple groups of reference signal resources; and determine a first reference signal resource based on the first group of reference signal resources and a model.

When the communication apparatus 1300 is configured to implement the functions of the access network device in the method embodiment shown in FIG. 9, the processing unit 1310 is configured to generate configuration information, where the configuration information includes configuration information of multiple groups of reference signal resources; and the transceiver unit 1320 is configured to send the configuration information to a first communication apparatus.

For more detailed descriptions of the processing unit 1310 and the transceiver unit 1320, directly refer to related descriptions in the method embodiments shown in FIG. 9, FIG. 10, and FIG. 12. Details are not described herein again.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to store instructions executed by the processor 1410, store input data for the processor 1410 to run instructions, or store data generated after the processor 1410 runs instructions.

When the communication apparatus 1400 is configured to implement the method shown in FIG. 9, the processor 1410 is configured to implement functions of the processing unit 1310, and the interface circuit 1420 is configured to implement functions of the transceiver unit 1320.

When the communication apparatus is a chip used in the terminal, the chip in the terminal implements the functions of the terminal in the foregoing method embodiments. The chip in the terminal receives information from another module (for example, a radio frequency module or an antenna) in the terminal, where the information is sent by the access network device to the terminal. Alternatively, the chip in the terminal sends information to another module (for example, a radio frequency module or an antenna) in the terminal, where the information is sent by the terminal to the access network device.

When the communication apparatus is a module used in the access network device, the module in the access network device implements the functions of the access network device in the foregoing method embodiments. The module in the access network device receives information from another module (for example, a radio frequency module or an antenna) in the access network device, where the information is sent by the terminal to the access network device. Alternatively, the module in the access network device sends information to another module (for example, a radio frequency module or an antenna) in the access network device, where the information is sent by the access network device to the terminal. The module in the access network device herein may be a baseband chip of the access network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be located in the ASIC. In addition, the ASIC may be located in the access network device or the terminal. Certainly, the processor and the storage medium may exist in the access network device or the terminal as discrete components.

All or a part of the foregoing embodiments may be implemented by using software, hardware, firmware, or any combination thereof. When software is used to implement embodiments, all or a part of embodiments may be implemented in the form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "multiple" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of descriptions, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:

   determining, by a first communication apparatus, a first group of reference signal resources from multiple groups of reference signal resources; and
   determining, by the first communication apparatus, a first reference signal resource based on the first group of reference signal resources and a model.

2. The method according to claim 1, wherein determining, by the first communication apparatus, the first group of reference signal resources from the multiple groups of reference signal resources comprises:

   receiving, by the first communication apparatus, first indication information from a second communication apparatus, wherein the first indication information comprises indication information of the first group of reference signal resources; and
determining, by the first communication apparatus, the first group of reference signal resources from the multiple groups of reference signal resources based on the first indication information.

3. The method according to claim 1, wherein determining, by the first communication apparatus, the first group of reference signal resources from the multiple groups of reference signal resources comprises:

receiving, by the first communication apparatus, second indication information from a second communication apparatus, wherein the second indication information comprises indication information of at least one reference signal resource comprised in the first group of reference signal resources; and
determining, by the first communication apparatus, the first group of reference signal resources from the multiple groups of reference signal resources based on the second indication information.

4. The method according to any one of claims 1 to 3, further comprising:

receiving, by the first communication apparatus, configuration information from the second communication apparatus, wherein the configuration information comprises configuration information of the multiple groups of reference signal resources; and
obtaining, by the first communication apparatus, the multiple groups of reference signal resources based on the configuration information of the multiple groups of reference signal resources.

5. The method according to any one of claims 1 to 4, wherein determining, by the first communication apparatus, the first reference signal resource based on the first group of reference signal resources and the model comprises:

measuring, by the first communication apparatus, the first group of reference signal resources to obtain a measurement result of the first group of reference signal resources;
determining an input of the model based on the measurement result of the first group of reference signal resources;
determining, by the first communication apparatus, an output of the model based on the input of the model and the model; and
determining, by the first communication apparatus, the first reference signal resource based on the output of the model.

6. A communication method, comprising:

generating, by a second communication apparatus, configuration information, wherein the configuration information comprises configuration information of multiple groups of reference signal resources; and
sending, by the second communication apparatus, the configuration information to a first communication apparatus.

7. The method according to claim 6, further comprising: sending, by the second communication apparatus, first indication information to the first communication apparatus, wherein the first indication information comprises indication information of a first group of reference signal resources in the multiple groups of reference signal resources.

8. The method according to claim 6, further comprising: sending, by the second communication apparatus, second indication information to the first communication apparatus, wherein the second indication information comprises indication information of at least one reference signal resource comprised in a first group of reference signal resources, and the first group of reference signal resources belongs to the multiple groups of reference signal resources.

9. A communication apparatus, comprising a unit configured to perform the method according to any one of claims 1 to 5.

10. A communication apparatus, comprising a processor, wherein the processor is configured to execute instructions, so that the communication apparatus performs the method according to any one of claims 1 to 5.

11. The apparatus according to claim 10, further comprising an interface circuit, wherein the interface circuit is configured to receive a signal from another communication apparatus other than the communication apparatus and transmit the signal to the processor, or send a signal from the processor to another communication apparatus other than the communication apparatus.

12. A communication apparatus, comprising a unit configured to perform the method according to any one of claims 6 to 8.

13. A communication apparatus, comprising a processor, wherein the processor is configured to execute instructions, so that the communication apparatus performs the method according to any one of claims 6 to 8.

14. The apparatus according to claim 13, further comprising an interface circuit, wherein the interface circuit is configured to receive a signal from another communication apparatus other than the communication apparatus and transmit the signal to the processor, or send a signal from the processor to another communication apparatus other than the communication apparatus.

15. A computer-readable storage medium, wherein the storage medium stores a computer program or instructions, and when the computer program or the instructions are executed by a communication apparatus, the method according to any one of claims 1 to 5 is implemented, or the method according to any one of claims 6 to 8 is implemented.

16. A computer program product, comprising a computer program or instructions, wherein when the computer program or the instructions are run by an apparatus, the method according to any one of claims 1 to 5 is performed, or the method according to any one of claims 6 to 8 is performed.

17. A processor, wherein the processor is coupled to a memory, and is configured to execute a computer program or instructions stored in the memory, so that the processor implements the method according to any one of claims 1 to 5 or the method according to any one of claims 6 to 8.

18. A communication system, comprising a first communication apparatus and a second communication apparatus, wherein

the first communication apparatus is configured to implement the method according to any one of claims 1 to 5; and
the second communication apparatus is configured to implement the method according to any one of claims 6 to 8.

FIG. 1

EP 4 665 037 A1

FIG. 2

FIG. 3

Non-real-time RIC

Access network device

Near-real-time RIC

CU

DU

RU

Terminal

FIG. 4

Non-real-time RIC

Access network device

Near-real-time RIC

CU-CP

CU-UP

DU

RU

Terminal

FIG. 5

**FIG. 6**

$$y = f\left(\sum_{i=0}^{n} w_i x_i + b\right)$$

$w_0\, x_0$

$w_1\, x_1$

$w_n\, x_n$

Neuron

$y$

**FIG. 7**

Neuron   Layer   Weight

Input layer

Hidden layer

Output layer

**FIG. 8**

| Access network device | | Terminal |
|---|---|---|

900: Configuration information, where the configuration information includes configuration information of multiple groups of reference signal resources

901: The terminal determines a first group of reference signal resources from the multiple groups of reference signal resources

902: The terminal determines a first reference signal resource based on the first group of reference signal resources and a model

FIG. 9

| Access network device | | | Terminal |

**1000: Configuration information, where the configuration information is used for configuring four groups of reference signal resources for the terminal**

**1001: Reference signal**

Training phase

**1002: The terminal trains a model based on measurement results of the four groups of reference signal resources**

1

| | | | | | | | |
|---|---|---|---|---|---|---|---|
| 0 | 8 | 16 | 24 | 32 | 40 | 48 | 56 |
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

**1003: First indication information, where the first indication information includes indication information of a first group of reference signal resources**

Inference phase

3

| | | | | | | | |
|---|---|---|---|---|---|---|---|
| 0 | 8 | 16 | 24 | 32 | 40 | 48 | 56 |
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

**1004: The terminal determines, based on a measurement result of the first group of reference signal resources and the model, a reference signal resource that meets a condition**

FIG. 10

EP 4 665 037 A1

| 0 | 8 | 16 | 24 | 32 | 40 | 48 | 56 |
|---|---|----|----|----|----|----|----|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

| 0 | 8 | 16 | 24 | 32 | 40 | 48 | 56 |
|---|---|----|----|----|----|----|----|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

| 0 | 8 | 16 | 24 | 32 | 40 | 48 | 56 |
|---|---|----|----|----|----|----|----|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

| 0 | 8 | 16 | 24 | 32 | 40 | 48 | 56 |
|---|---|----|----|----|----|----|----|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

FIG. 11

| Access network device | | Terminal |
|---|---|---|

**1200**: Configuration information, where the configuration information is used for configuring four groups of reference signal resources for the terminal

**1201**: Reference signal

Training phase

**1202**: The terminal trains a model based on measurement results of the four groups of reference signal resources

| 0 | 8 | 16 | 24 | 32 | 40 | 48 | 56 |
|---|---|---|---|---|---|---|---|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

**1203**: Second indication information, where the second indication information includes indication information of at least one reference signal resource included in a first group of reference information resources

Inference phase

**1204**: The terminal determines, based on a measurement result of the first group of reference signal resources and the model, a reference signal resource that meets a condition

| 0 | 8 | 16 | 24 | 32 | 40 | 48 | 56 |
|---|---|---|---|---|---|---|---|
| 1 | 9 | 17 | 25 | 33 | 41 | 49 | 57 |
| 2 | 10 | 18 | 26 | 34 | 42 | 50 | 58 |
| 3 | 11 | 19 | 27 | 35 | 43 | 51 | 59 |
| 4 | 12 | 20 | 28 | 36 | 44 | 52 | 60 |
| 5 | 13 | 21 | 29 | 37 | 45 | 53 | 61 |
| 6 | 14 | 22 | 30 | 38 | 46 | 54 | 62 |
| 7 | 15 | 23 | 31 | 39 | 47 | 55 | 63 |

FIG. 12

Communication apparatus 1300

Processing unit 1310

Transceiver unit 1320

FIG. 13

Communication apparatus 1400

Processor 1410

Interface circuit 1420

Memory 1430

FIG. 14

## INTERNATIONAL SEARCH REPORT

| International application No. |
|---|
| **PCT/CN2024/074914** |

**A.    CLASSIFICATION OF SUBJECT MATTER**

H04W 72/044(2023.01)i;  G06N 5/04(2023.01)i;  H04W 72/232(2023.01)i;  H04L 41/16(2022.01)i

According to International Patent Classification (IPC) or to both national classification and IPC

**B.    FIELDS SEARCHED**

Minimum documentation searched (classification system followed by classification symbols)

IPC：H04W G06N H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 参考信号资源, 组, 集, 模型, 接入网智能控制, 人工智能, 学习, 训练, 指示, 资源, 波束, 测量, artificial intelligence, AI, RAN intelligent controller, RIC, group, set, model, learning, training, indicate, resource, beam, measure

**C.    DOCUMENTS CONSIDERED TO BE RELEVANT**

| Category* | Citation of document, with indication, where appropriate, of the relevant passages | Relevant to claim No. |
|---|---|---|
| X | WO 2022174461 A1 (BEIJING XIAOMI MOBILE SOFTWARE CO., LTD.) 25 August 2022 (2022-08-25)<br>description, page 9, line 2 to page 25, third-to-last line | 1-18 |
| A | CN 113923780 A (HUAWEI TECHNOLOGIES CO., LTD.) 11 January 2022 (2022-01-11)<br>entire document | 1-18 |
| A | CN 115549877 A (SHANGHAI LANGBO COMMUNICATION TECHNOLOGY CO., LTD.) 30 December 2022 (2022-12-30)<br>entire document | 1-18 |
| A | WO 2022265141 A1 (LG ELECTRONICS INC.) 22 December 2022 (2022-12-22)<br>entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 April 2024** | **24 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/074914** |

| Patent document cited in search report | | | Publication date (day/month/year) | Patent family member(s) | Publication date (day/month/year) |
| --- | --- | --- | --- | --- | --- |
| WO | 2022174461 | A1 | 25 August 2022 | None | |
| CN | 113923780 | A | 11 January 2022 | None | |
| CN | 115549877 | A | 30 December 2022 | None | |
| WO | 2022265141 | A1 | 22 December 2022 | None | |

Form PCT/ISA/210 (patent family annex) (July 2022)

**REFERENCES CITED IN THE DESCRIPTION**

**Patent documents cited in the description**

- CN 202310227057